# FASCICULE DE BREVET EUROPEEN

(11) **EP 3 370 363 B1**
(45) Date de publication et mention de la délivrance du brevet: **02.12.2020**
(21) Numéro de dépôt: 18159571.1
(22) Date de dépôt: 01.03.2018
(51) Int. Cl.: H04L 1/18, H04L 5/00, H04L 29/12, H04W 8/26, H04W 72/00, H04W 92/00, H04L 29/08, H04L 12/707, H04B 7/185, H04L 1/16, H04L 12/803, H04L 12/801, H04L 29/06

(54) **SOLUTION DE TRANSPORT DE DONNÉES HYBRIDE NOTAMMENT POUR LIAISONS PAR SATELLITE**
HYBRIDE DATENTRANSPORTLÖSUNG, INSBESONDERE FÜR VERBINDUNGEN ÜBER SATELLIT
HYBRID DATA TRANSPORT SOLUTION IN PARTICULAR FOR SATELLITE LINKS

(30) Priorité: 02.03.2017 FR 1700204
(43) Date de publication de la demande: 05.09.2018
(73) Titulaire: THALES, 92400 Courbevoie (FR)
(72) Inventeur: ARNAL, Fabrice, 31270 Cugnaux (FR); BAUDOIN, Cédric, 31400 Toulouse (FR)
(74) Mandataire: Marks & Clerk France

(56) Documents cités:
- CN-A- 105 049 369
- BALASUBRAMANIAN ANANTHARAMAN ET AL: "Detecting Shared Congested Router for Mobile Communication Using Multiple-Interface Devices", 2015 IEEE GLOBAL COMMUNICATIONS CONFERENCE (GLOBECOM), IEEE, 6 décembre 2015 (2015-12-06), pages 1-6, XP032872615, DOI: 10.1109/GLOCOM.2014.7417478
- CHEN XIAO ET AL: "Performance Guaranteed Routing Protocols for Asymmetric Sensor Networks", IEEE TRANSACTIONS ON EMERGING TOPICS IN COMPUTING, IEEE, vol. 1, no. 1, 1 juin 2013 (2013-06-01), pages 111-120, XP011527603, DOI: 10.1109/TETC.2013.2273888

## Description

### DOMAINE DE L'INVENTION

L'invention se rapporte au domaine des télécommunications et notamment les télécommunications par satellite.

Elle concerne les moyens de communication « multi-chemins » permettant d'exploiter de façon optimale (i.e. contrôlée en temps réel) plusieurs canaux de communication simultanément.

Elle s'intéresse plus particulièrement aux systèmes de communication exploitant les ressources d'au moins deux canaux logiques, au sens réseau (i.e. deux voies de transmission),dont l'un des canaux, qu'on qualifie dans la suite du texte de canal unidirectionnel, est dépourvu de toute voie de retour.

### CONTEXTE DE L'INVENTION - ART ANTERIEUR

Dans le contexte des systèmes de communication actuels un problème important à résoudre consiste dans l'importance croissante des débits d'informations que ces systèmes doivent supporter. Les réseaux de communication sont en effet mis à disposition d'utilisateurs abonnés qui les utilisent généralement quand bon leur semble et de manière totalement asynchrone, de sorte que, lorsque le débit requis sur une branche d'un réseau de communication est trop important, on assiste à une saturation du réseau et un ralentissement des échanges de données pouvant s'accompagner de pertes de paquets d'informations.

Ce phénomène est particulièrement sensible dans le contexte des échanges de données par Internet du fait de l'accroissement du nombre de connexion au réseau et de la taille de plus en plus importante des données échangées entre les utilisateurs abonnés au réseau et celles échangées entre les utilisateurs ("clients") et des zones de stockage d'informations distantes ou des bases de données ("serveurs").

Une solution envisagée pour faire face à cet accroissement, consiste à utiliser simultanément deux ou plusieurs canaux de communication distincts dont l'utilisateur peut disposer au niveau de son terminal, pour transmettre ou recevoir les informations souhaitées.

Dans le cadre du réseau Internet une telle solution passe par un aménagement du protocole d'échange de données existant, le protocole TCP, de façon à ce que ce dernier soit capable de gérer simultanément des flots de données (on parle de "sub-flows") passant par différents canaux et destinés à être assemblés entre eux pour former un flot de données unique au niveau de l'utilisateur, flot de données destiné à alimenter une application donnée, mise en œuvre par cet utilisateur (stockage de données dans un centre de stockage déporté ou lecture de fichiers vidéo transmis par un plateforme de diffusion distante par exemple).

Cet aménagement du protocole TCP a donné naissance au protocole MP-TCP, en voie de standardisation. Ce protocole amélioré présente notamment l'avantage de n'affecter que la couche de transport du réseau de communication considéré.

"MP-TCP" constitue une extension du protocole de transport standard "TCP" qui permet d'adjoindre à ce protocole des capacités dites "multivoies" ou "Multi-Path" ("MP") selon la terminologie anglo-saxonne.

Un cas typique de mise en œuvre du protocole "MP-TCP" tel qu'on peut à l'heure actuelle l'envisager est celui des téléphones mobiles intelligents ou « Smartphones » selon la terminologie anglo-saxonne reconnue. Les Smartphones sont typiquement des équipements pourvus de 2 interfaces d'accès réseaux : une interface avec des réseaux de téléphonie mobile, aux standards 3G/4G par exemple, et une interface WI-FI™ avec un terminal ("set top box" ou simplement "box") Internet.

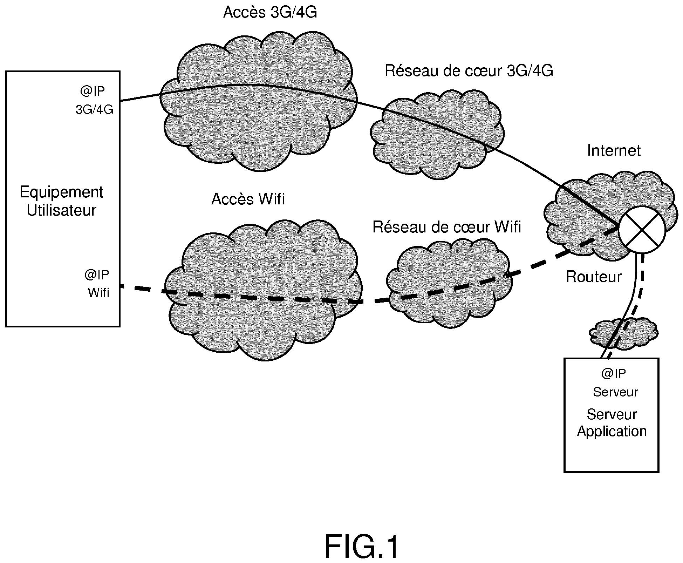

La figure 1 illustre le principe d'utilisation de deux accès Internet distincts grâce au protocole MP-TCP, en prenant pour exemple typique d'application l'application aux Smartphones.

Dans une telle configuration matérielle, le protocole "MP-TCP" permet d'exploiter les deux réseaux (3G/4G et WI-FI™) pour télécharger ou lire des données depuis un même serveur, pour autant que ce dernier supporte ce protocole, en combinant les capacités des deux réseaux pour assurer un même service de transport global, vu de l'application.

Dans ce cas, les données empruntent 2 voies physiquement différentes (en en trait plein et en trait pointillé sur la figure 1), et prédéterminées en fonction des adresses IP des clients et serveurs.

Ces voies peuvent éventuellement emprunter une section commune, comme illustré sur figure 1, entre un des routeurs du réseau et le serveur TCP, ce routeur ne possédant aucune fonctionnalité particulière.

On rappelle ici, qu'un protocole de type MP-TCP permet ainsi de créer et de gérer des flots de données secondaires ('subflows" selon la dénomination anglo-saxonne) associés à des paires interface/adresse différentes, mais aussi identiques en partie ou en totalité.

L'intégration de la fonctionnalité multivoies ("Multi-Path") dans un protocole TCP classique suppose bien entendu différents aménagements.

En particulier, elle suppose l'intégration d'une couche logicielle propre localisée sous la couche d'interface vers l'application qui reste, quant à elle, inchangée. Seule l'implémentation logicielle (typiquement dans le noyau de l'OS ou "operating system") est en pratique légèrement différente.

Fonctionnellement, cette implémentation est gérée dans la pile logicielle des clients/serveurs TCP en prévoyant deux sous-couches : la sous-couche MP-TCP à proprement parler qui a conscience de tous les flots de données secondaires ("subflows"), et la sous-couche "subflow" qui n'est rien d'autre que la mise en œuvre locale d'une connexion TCP classique (i.e. non "MP") avec l'interface IP de chacun des canaux véhiculant les flots de données secondaires ("subflows").

L'intégration de la fonctionnalité multivoies ("Multi-Path") suppose également la création de messages et d'une signalisation spécifiques permettant à une machine compatible MP-TCP, de déterminer si son correspondant est compatible MP-TCP, d'être informée qu'une interface locale d'un hôte est disponible pour la communication "Multi-Path", puis de procéder à la création proprement dite des "subflows".

L'intégration de la fonctionnalité multivoies dans un protocole TCP classique reste cependant une solution avantageuse en ce qu'elle permet de conserver la quasi-totalité des infrastructures matérielles et logicielles déjà en place.

L'ensemble des règles régissant la mise en place et l'exploitation de liaison de type MP-TCP fait l'objet du document "request for comments" RFC6824 qui décrit les aspects techniques du protocole MP-TCP.

La solution consistant à mettre en place un protocole MP-TCP pour améliorer le débit de transfert de données sur un réseau, le réseau Internet notamment, nécessite donc de disposer de plusieurs canaux de transmission disponibles au travers desquels on fait transiter les paquets de données en plusieurs flots qui sont recombinés, à l'arrivée, pour restituer la trame des données attendues.

Cependant, chaque canal est supposé pouvoir supporter des échanges bidirectionnels (données et protocole) entre émetteur et récepteur, une voie (voie "aller") étant dédiée au transfert de données de l'émetteur vers le récepteur tandis qu'une autre voie (voie "retour") est dédiée au transfert d'informations d'acquittement entre le récepteur destinataire des données et l'émetteur. Ces informations d'acquittement sont nécessaires au contrôle de congestion du chemin réseau considéré et à la fiabilisation du transfert pour déclencher des retransmissions lorsque cela s'avère nécessaire.

Or, il est à noter que, s'agissant de transfert de données par satellite à usage du grand public, on dispose généralement de deux types distincts de liaisons: des liaisons bidirectionnelles permettant des communications de type "bande large" ou "Broadband" selon la terminologie anglo-saxonne et des liaisons unidirectionnelles permettant des communications de type "diffusion" ou "Broadcast" selon cette même terminologie; les secondes étant, à l'heure actuelle, largement plus répandues.

Par suite, dans le cadre d'une transmission de données par satellite selon un protocole TCP, il n'est pas toujours possible d'améliorer le débit de transmission des données en mettant en place un protocole MP-TCP, protocole qui suppose la disponibilité de plusieurs canaux de transmission et requiert, comme le protocole TCP, la mise en place de flux de données bidirectionnels.

En particulier, dans le contexte de liaisons de données impliquant plusieurs canaux satellites, la mise en place de liaisons suivant un protocole MP-TCP ne constitue pas toujours, à l'heure actuelle, une solution envisageable pour améliorer le débit, faute d'un nombre suffisant de liaisons de données bidirectionnelles disponibles. Le problème est posé par l'absence de voie de retour en nombre suffisant empêche aux solutions de transport multivoies efficaces, comme MP-TCP, de pouvoir être déployées dans ce contexte. En effet le transport de la signalisation des accusés de réception (signaux "ACK") qui permettent, par le biais des détections de pertes de paquets, de déterminer le niveau et les évènements de congestion afin de prendre les actions nécessaires au niveau de l'émetteur de données, est assuré par la voie de retour.

Pour résoudre ce problème propre aux liaisons par satellite, des méthodes de routage asymétriques et unidirectionnelles (comme la solution UDLR ("UniDirectional Link Routing" selon la terminologie anglo-saxonne), ont été imaginées, mettant notamment en œuvre une liaison par satellite unidirectionnelle, couplée à une voie de retour terrestre.

Cependant, une telle solution s'avère n'être pas totalement adaptée au problème. En effet, dans la mesure où elle est généralement mise en place au niveau de la couche de routage (couche 3), les éventuelles congestions pouvant se produire de manière séparée sur chacun des deux chemins ne peuvent pas être prises en compte de manière globale.

Par ailleurs, pour résoudre, au moins partiellement, ce problème, il existe dans le commerce des solutions de type "smart router" (ou routeur intelligent) qui réalisent un partage de charge au niveau de la transmission des paquets de données, en mettant en œuvre divers algorithmes de répartition. Cependant, ces équipements ne peuvent pas travailler au niveau de la couche de Transport et ne peuvent donc pas prendre de décisions efficaces applicables à des interfaces "standard" avec le réseau. Pire encore, dans le cas d'applications utilisant le protocole MP-TCP, des décisions de routage incohérentes, incompatible avec le protocole MP-TCP pourraient être prises par le "smart router".

Par ailleurs également, en marge de ces solutions de partage de charge et des fonctions de "Mulithoming" (i.e. connexion simultanée sur plusieurs réseaux) implémentées au niveau de la couche Transport, on peut mentionner également que la mise en œuvre de fonctions de type PEP-TCP (PEP pour "Performance Enhancement Proxy" selon la dénomination anglo-saxonne). Ce type de fonction permet avantageusement d'éviter, dans une certaine mesure, d'éventuelles congestions pouvant se produire sur une liaison de données, notamment dans le cas de l'utilisation d'un canal de transmission satellite.

Enfin, une solution partielle à ce problème peut également consister en un système de transmission de données mettant en œuvre le protocole MP-TCP entre des PEP au niveau d'une passerelle satellite ("gateway" ou "GW" selon la dénomination anglo-saxonne) et des terminaux satellite.

### PRESENTATION DE L'INVENTION

Un but de l'invention est de proposer une solution permettant de constituer des liaisons de données bidirectionnelles en utilisant différents canaux de transmission, pour véhiculer des paquets de données sous forme de flots de données secondaires; chaque flot secondaire transitant par un canal de transmission donné.

Un autre but de l'invention est de proposer une solution permettant d'optimiser la transmission de flots de données sous forme de flots de données secondaires transitant en parallèle, en utilisant à la fois des canaux de transmission bidirectionnels et des canaux de transmission unidirectionnels.

A cet effet l'invention a pour objet, selon un premier aspect, un procédé pour réaliser l'échange de flots de données entre deux terminaux, un terminal serveur fournissant des données à un terminal client, par l'intermédiaires d'une liaison multivoies formée d'une pluralité de canaux de transmission dont au moins un des canaux est un canal monodirectionnel, ledit flot de donné contenant des données transmises du terminal serveur au terminal client ainsi que des informations d'acquittement transmises dans le même flot du terminal client au terminal serveur.

Le procédé selon l'invention met en œuvre un module d'interface dédié à l'émission des données formant ledit flot de données, réalisant la séparation dudit flot de données en une pluralité de flots de données secondaires et faisant transiter lesdits flots de données secondaires via ladite pluralité de canaux de transmission formant la liaison multivoies.

Il met également en œuvre un module d'interface dédié à la réception desdites données, réalisant la réception des données formant les flots de données secondaires transmis via ladite pluralité de canaux et le réassemblage desdits flots de données secondaires en un flot de données unique.

Selon l'invention, les modules d'interface sont en outre configurés pour assurer le routage des informations d'acquittement des paquets de données composant un flot de données secondaire transitant par un canal monodirectionnel, en les associant aux informations d'acquittement des paquets de données composant un flot de données secondaire transitant par un canal bidirectionnel.

Selon différentes dispositions particulières pouvant être considérées séparément ou en combinaison les unes avec les autres, le dispositif peut présenter différentes caractéristiques additionnelles. Ainsi:
Selon une première caractéristique, le protocole d'échange des données entre les deux terminaux étant un protocole TCP, chaque module d'interface est configuré pour réaliser une fonction d'interface TCP/MPTCP permettant de faire transiter le flot de données TCP considéré par la liaison multivoies, sous forme de flots de données secondaires chaque flots secondaire étant conforme au protocole MP-TCP.

Selon une autre caractéristique, dans ce même contexte, un module d'interface, en mode émission, est configuré de façon à assurer simultanément:
- une fonction "interface TCP" qui gère les échanges de flots de données avec le terminal considéré;
- une fonction "adaptation TCP/MP-TCP" qui assure en la séparation du flot des données, au format TCP, en une pluralité de flots de données secondaires au format MP-TCP;
- une fonction "routage asymétrique" qui permet de gérer le routage par un canal bidirectionnel des paquets d'informations d'acquittement accompagnant les paquets de données composant un flot de données secondaire destiné à transiter par un canal unidirectionnel.

Selon une autre caractéristique, dans ce même contexte, la fonction de routage asymétrique est assurée, en mode émission, par un module d'interface réalise une identification du ou des flots de données secondaires formés à partir d'un flot de donné unique, destinés à transiter par un canal unidirectionnel, ainsi qu'un marquage des informations d'acquittement constituant ce ou ces derniers avant d'intégrer ces dernières à un flot de données destiné à transiter par un canal bidirectionnel.

Selon une autre caractéristique, dans ce même contexte, un module d'interface, en mode réception, est configuré de façon à assurer simultanément:
- une fonction "interface TCP", qui gère les échanges de flots de données avec le terminal considéré;
- une fonction "adaptation TCP/MP-TCP" qui assure la reconstitution d'un flot de données unique au format TCP à partir des données composant les flots de données secondaires reçus
- une fonction "routage asymétrique" qui permet de récupérer les paquets d'informations d'acquittement relatives aux paquets de données composant un flot de données secondaire ayant transité par un canal unidirectionnel, et de réassocier les données aux informations d'acquittement correspondantes.

Selon une autre caractéristique, dans ce même contexte, la fonction de routage asymétrique est assurée, en mode réception, par un module d'interface qui réalise l'identification des informations d'acquittement marquées et la réassociation de ces informations aux données constituant le flot de données secondaire ayant transité par le canal unidirectionnel correspondant.

Selon une autre caractéristique de l'invention, les éléments d'interface sont intégrés à des serveurs PEP, placés en sortie des terminaux considérés et chargés de gérer et d'optimiser le débit des données échangées de façon à éviter la saturation de la liaison et la perte récurrente de paquets de données.

Selon une autre caractéristique, dans ce même contexte où le protocole d'échange des données entre les deux terminaux est un protocole TCP, les fonctions "interface TCP", et "adaptation TCP/MP-TCP" du module d'interface en mode émission étant intégrées à un serveur PEP placé en sortie du terminal serveur et les fonctions "interface TCP", et "adaptation MP-TCP/TCP" du module d'interface en mode réception étant intégrées à un serveur PEP placé en sortie du terminal client, les fonctions "routage asymétrique" respectives sont implantées dans des machines interfaces additionnelles, de type routeur ou commutateurs, placées en sortie des serveurs PEP.

L'invention a également pour objet, selon un second aspect, la mise en œuvre du procédé selon l'invention pour réaliser l'échange de flots de données entre deux terminaux, par l'intermédiaires d'une liaison multivoies formée d'une pluralité de canaux de transmission satellite dont au moins un des canaux est un canal monodirectionnel assurant des liaisons de type broadcast.

Avantageusement le procédé selon l'invention permet de développer une architecture réseau multivoies compatible avec un fonctionnement MP-TCP, alors qu'une des voies, autrement dit une des liaisons de données exploitées, étant unidirectionnelle. Pour transporter les accusés réception (ACKs) correspondant à la voie de retour absente, la voie de retour de l'autre système est employée, en appliquant des règles de routage spécifiques au niveau des composants où les chemins réseaux sont partagés.

### DESCRIPTION DES FIGURES

Les caractéristiques et avantages de l'invention seront mieux appréciés grâce à la description qui suit, description qui s'appuie sur les figures annexées qui présentent:
la figure 1, une illustration relative au contexte de transport de données hybride faisant appel à plusieurs canaux de communication;
la figure 2, un exemple de configuration matérielle dans laquelle le procédé selon l'invention peut être mis en œuvre;
la figure 3, une illustration du principe de mise en œuvre du procédé selon l'invention ;
la figure 4, un schéma illustrant les composants principaux du procédé selon l'invention;
les figures 5 et 6, des schémas fonctionnels illustrant le principe de routage asymétrique mis en œuvre par le procédé selon l'invention.
La figure 7 un graphique illustrant les performances en termes de débit obtenues par mis en œuvre du procédé selon l'invention.

### DESCRIPTION DETAILLEE

Dans le texte qui suit, pour des raisons de clarté de l'exposé, le procédé selon l'invention est présenté au travers d'un exemple d'application portant sur l'établissement d'une liaison de données multivoies entre deux terminaux connectés au réseau Internet au moyen d'une infrastructure réseau comportant deux canaux de communication par satellite dont l'un est un canal unidirectionnel au sens réseau du terme, c'est-à-dire un canal ne disposant d'aucune voie de retour. Cet exemple particulier, qui permet de mettre en évidence les caractéristiques techniques avantageuses du dispositif selon l'invention, n'a bien entendu pas pour objet de limiter la portée ou l'étendue de l'invention à ce seul cas d'application.

En particulier l'utilisation du procédé selon l'invention n'est pas limitée au cas d'une infrastructure réseau Internet et du seul protocole TCP, mais peut être étendue à des infrastructures réseau comportant une pluralité de canaux de communication accessibles, ces canaux étant tous des canaux bidirectionnels ou certains de ces canaux étant seulement unidirectionnels.

De même, le procédé selon l'invention peut être mis en œuvre dans tous types d'infrastructure réseau, comportant au moins 2 canaux, un canal bidirectionnel et un autre canal unidirectionnel tels que par exemple:
- un canal satellite et un canal terrestre;
- deux canaux satellite;
- deux canaux terrestres

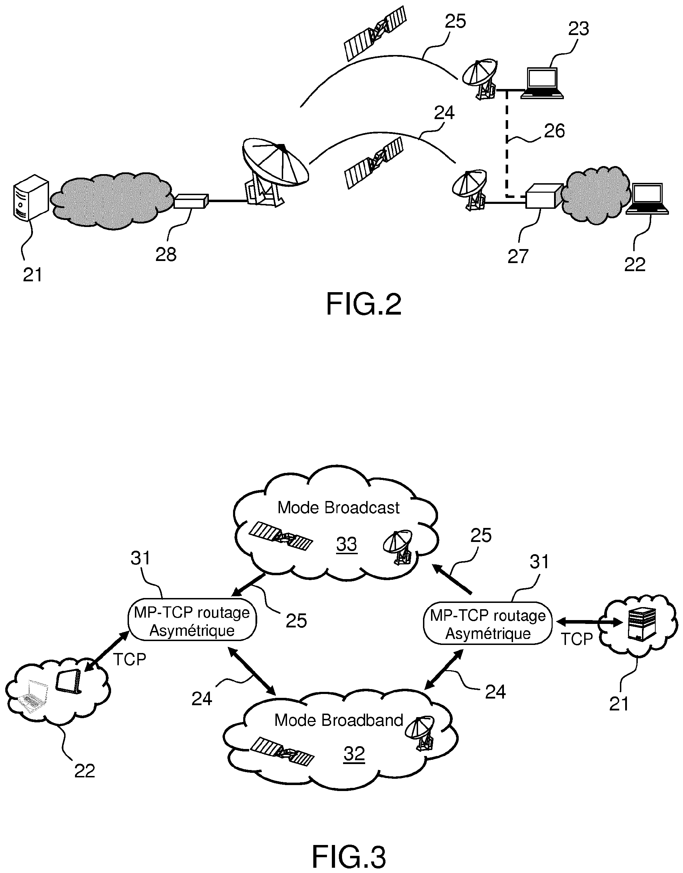

La figure 2 illustre un exemple d'infrastructure réseau utilisant des canaux satellite pour établir une communication Internet entre un terminal 21 pourvoyeur de services tels que la fourniture de fichiers vidéo à la demande, et des terminaux utilisateurs 22 et 23 auxquels les services sont accessibles. Dans l'infrastructure présentée sur la figure 2 on dispose de deux canaux satellite 24 et 25 dont l'un, 24, permet une communication bidirectionnelle de type Broadband et l'autre, 25, seulement une communication unidirectionnelle, de type Broadcast. La réception des données satellite est ici réalisée soit de manière directe (mode broadcast) soit par l'intermédiaire de PEP 27 (mode Broadband) destinés en particulier à optimiser le débit de transfert des données. Ces deux canaux utilisés ici pour transmettre des données vers deux terminaux différents 22 et 23, ne peuvent cependant pas être utilisés tels quels pour réaliser une transmission multivoies, du terminal pourvoyeurs 21 vers le terminal utilisateur 22 par exemple. En effet, dans un telle structure, le terminal 23 ne peut que recevoir des données du terminal pourvoyeur et ne peut transférer en retour aucune information d'acquittement de sorte que si les paquets de données transmis par le terminal pourvoyeur 21 sont altérés pendant le transfert, le terminal utilisateur 23 n'a aucune possibilité d'en informer l'émetteur de sorte que les données altérées sont définitivement perdues.

Par suite, en l'état, l'utilisation du canal de communication unidirectionnel 25, comme illustré par le trait pointillé 26, pour réaliser une liaison multivoies entre le terminal pourvoyeur 21 et le seul terminal utilisateur 22, dans le cadre d'un protocole d'échange de données de type TCP par exemple s'avère impossible, même si le terminal utilisateur 22, ou "client", et le terminal pourvoyeur 21, ou "serveur" peuvent être configurés pour échanger des données via une liaison multicanaux au moyen d'interfaces multivoies 27 et 28.

Avantageusement, comme l'illustre la figure 3, cette impossibilité peut être levée par la mise en œuvre du procédé selon l'invention 31, en amont et en aval du canal de communication hybride utilisé. Par canal hybride on entend un canal comportant une ou plusieurs voies unidirectionnelles et une ou plusieurs voies bidirectionnelles. Dans le cas d'utilisation de canaux satellite, un canal hybride est par exemple constitué d'une liaison satellite de type Broadcast 33 et d'une liaison satellite de type Broadband 32.

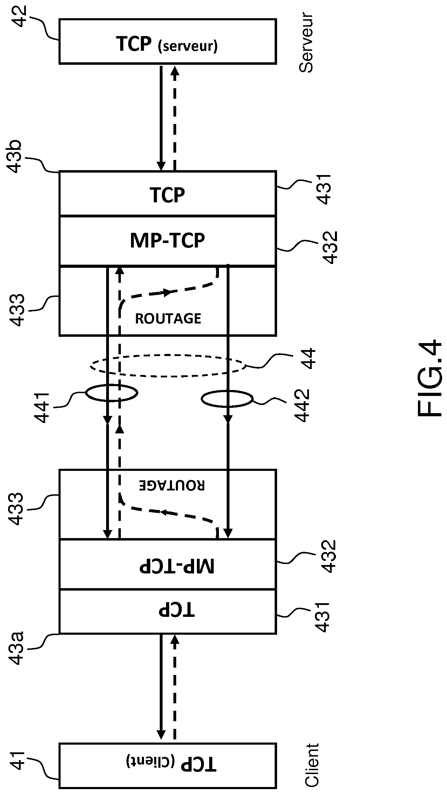

La figure 4 illustre la structure fonctionnelle générale du procédé de transfert de données multivoies selon l'invention, dans le cadre, pris comme exemple, de la transmission de données suivant, un protocole TCP, d'un terminal serveur 42 vers un terminal client 41. Le transfert de données est ici présenté comme étant réalisé via deux canaux de communication, un canal bidirectionnel 441 et un canal unidirectionnel 442. Cependant il apparaitra clairement en lisant les paragraphes qui suivent que la structure décrite peut aisément être généralisée pour assurer un transfert de données via une pluralité de canaux de communication formant un canal multivoies 44.

La structure fonctionnelle du procédé selon l'invention implémente principalement deux éléments d'interface 43a et 43b venant s'interposer entre les terminaux 41 et 42 considérés et le réseau de communication 44 reliant les deux terminaux. Pour une séquence donnée de transfert de données, l'élément d'interface 43a en communication avec le terminal client 41, c'est-à-dire au terminal recevant les données, fonctionne en mode réception, tandis que l'élément d'interface 43b en communication avec le terminal serveur 42, c'est-à-dire au terminal transmettant les données, fonctionne en mode émission.

De manière générale, chaque élément d'interface 43a ou 43b assure simultanément une fonction "interface TCP" 431, une fonction "adaptation TCP/MP-TCP" 432 et une fonction "routage asymétrique" 433. Les deux éléments d'interfaces 43a et 43b mettent en œuvre ces différentes fonctions de manière symétrique.

La fonction "interface TCP" 431 est destinée, de manière connue, à permettre l'échange de flots de données avec le terminal auquel l'élément d'interface considéré 43a ou 43b est relié. Cette fonction permet avantageusement de mettre en œuvre le procédé selon l'invention sans avoir à modifier le terminal serveur 42 et le terminal client 41 existants qui peuvent ainsi continuer à échanger des données suivant le protocole TCP préexistant.

La fonction "adaptation TCP/MP-TCP" 432 assure, en mode réception, c'est à dire dans le cas de l'élément d'interface 43a, la séparation du flot des données, au format TCP, reçues du terminal serveur 41 en une pluralité de flots de données secondaires.

Inversement, en mode émission, c'est à dire dans le cas de l'élément d'interface 43b, elle assure la recombinaison des données, au format MP-TCP, provenant des différents canaux de communication en un flot de données unique au format TCP.

Le protocole MP-TCP, connu en soi, suppose que les canaux de communication par lesquels transitent les différents flots de données secondaires, soient pourvus d'une voie de retour permettant au destinataire de transmettre les informations d'acquittement relatives aux données reçues. Or comme l'illustre la figure 4, certains canaux exploités sont des canaux unidirectionnels, tels que le canal 442 c'est-à-dire sans voie de retour.

Par suite pour pallier cette absence de voie de retour et permettre l'exploitation de canaux unidirectionnels chaque élément d'interface 43a ou 43b du dispositif selon l'invention est pourvu d'une fonction de routage asymétrique.

La fonction "routage asymétrique" 433 selon l'invention, permet avantageusement de tenir compte de l'utilisation de canaux de transmission unidirectionnels, des canaux exploités pour transmettre des données en mode Broadcast par exemple, et de prendre en compte d'éventuelles saturations des flots de données secondaires transitant par ces canaux. En créant une voie de retour artificielle, la fonction "routage asymétrique" 433 permet avantageusement de sécuriser l'échange de données via un canal de communication unidirectionnel.

D'un point de vue fonctionnel, en mode réception, c'est à dire dans le cas de l'élément d'interface 43a, la fonction "routage asymétrique" 433, effectue, une redirection des informations d'acquittement relatives au données qui transitent par le canal unidirectionnel 432, vers la voie retour du canal bidirectionnel 441

Inversement, en mode émission, c'est-à-dire c'est à dire dans le cas de l'élément d'interface 43b, la fonction "routage asymétrique" 433, réassocie le flot des informations d'acquittement relatives aux données transmises via le canal unidirectionnel 442 avec le flot de données secondaire transmis via le canal unidirectionnel 441 de façon à reformer un flot de données secondaire MP-TCP.

D'un point de vue matériel, le procédé selon l'invention peut être mis en œuvre de différentes façons. Les diverses fonctions qu'il remplit, décrites dans le texte qui précède, peuvent par exemple être implémentées au niveau de composants d'interface de type PEP ou "Performance Enhancement Proxy". Ces dispositifs sont généralement interposés, dans le cadre de l'exploitation de canaux de communication satellite en particulier, entre le terminal considéré et le réseau de communication. Ils jouent notamment le rôle de mémoires tampons, et permettent "d'accélérer" ou de réguler la fluidité du transfert des données émises ou reçues par le terminal considéré.

D'un point de vue fonctionnel, suivant que le terminal considéré remplit une fonction de type serveur ou de type client, un PEP joue normalement, vis-à-vis de celui-ci, le rôle d'un terminal client ou d'un terminal serveur. Réciproquement, vis-à-vis du réseau, il joue le rôle de client ou de serveur. Un PEP assure donc en soi une fonction d'interface TCP telle que la fonction 431.

Par suite dans un tel contexte, une solution économiquement avantageuse pour mettre en œuvre le procédé selon l'invention consiste avantageusement à modifier la structure logicielle du PEP considéré de façon doter ce dernier d'une fonction "adaptation TCP/MP-TCP" tel que la fonction 432 ainsi que d'une fonction "routage asymétrique", telle que la fonction 433.

Ces deux fonctions peuvent ainsi être intégrées comme routines complémentaires à la structure logicielle implémentée par un matériel existant, de sorte que la mise en place du dispositif selon l'invention ne nécessite aucun ajout de matériel.

On obtient ainsi avantageusement une structure PEP multivoies capable de prendre en charge des flots de données transitant par différents canaux dont certains peuvent être unidirectionnels, de telle façon que l'exploitation de plusieurs canaux soit transparente pour les terminaux utilisateurs.

La fonction de routage asymétrique constitue, en association avec les fonctions d'interface TCP et d'adaptation TCP/MP-TCP l'élément caractéristique du dispositif selon l'invention. Selon la configuration matérielle et/ou logicielle envisagée cette fonction, illustrée par les figures 3 et 4, peut être réalisée de différentes façons.

Dans le contexte d'une structure incluant des serveurs PEP multivoies, la fonction de routage asymétrique peut ainsi être installée au sein même de l'implémentation logicielle de la pile PEP multivoies, en modifiant les adresses IP d'entrée et de sortie pour les paquets de données, après leur séparation en différents flots de données secondaires.

Alternativement, elle peut être installée dans la machine implémentant fonction PEP multivoies, comme un composant logiciel séparé intervenant sur la pile IP au travers de laquelle le protocole Internet est géré.

Alternativement encore elle peut être installée sur une machine séparée interposée entre le réseau de communication (i.e. les différents canaux exploités) et la machine implémentant la fonction PEP multivoies.

D'un point de vue fonctionnel, le routage asymétrique a pour fonction, comme cela a été dit précédemment, de détecter le flot des informations d'acquittement transmises par le terminal client et concernant les données ayant transité par un canal unidirectionnel et à faire transiter ces informations par la voie retour d'un des canaux bidirectionnels mis en œuvre. Ainsi, dans l'exemple de la figure 4, la fonction routage asymétrique assurera le transit des informations d'acquittement relatives au canal 442 par la voie retour du canal bidirectionnel 441.

L'implémentation de ce routage asymétrique peut être réalisée de différentes façons.

Une mise en œuvre directe (et préférée) consiste, par exemple, à manipuler les règles de la table de routage locale qui identifie les paquets de données pour réaliser quand cela est nécessaire une redirection de certains paquets de données.

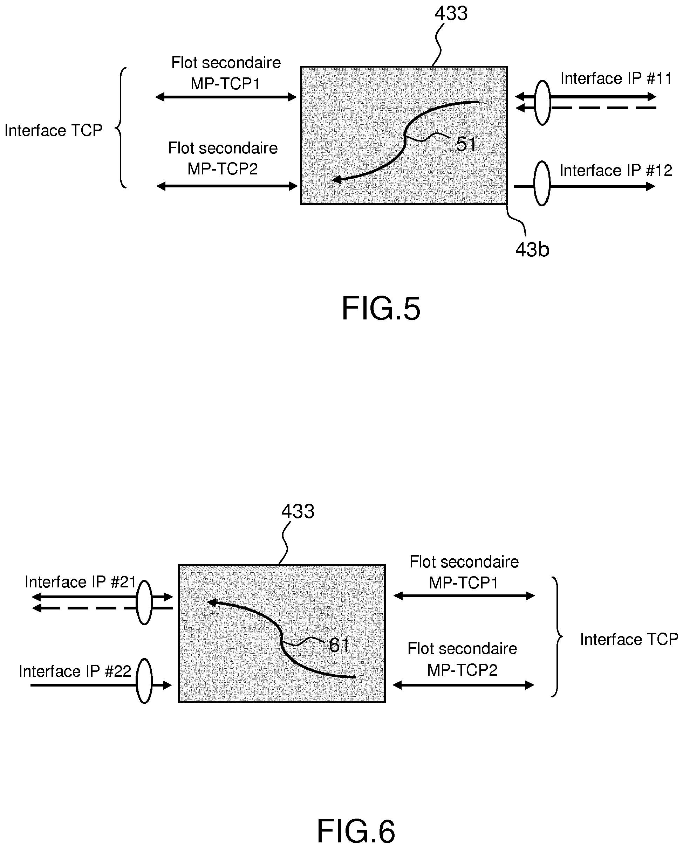

Ainsi, comme l'illustre la figure 5, dans le cas du PEP émetteur 43b relié au terminal serveur 42, le routage asymétrique 433 aura pour fonctions de:
- détecter sur le canal bidirectionnel concerné (IP Interface # 11) le flot d'informations d'acquittement correspondant aux données du flot de données secondaire ayant été transmis par le canal unidirectionnel (IP Interface # 12);
- de marquer ces paquets d'informations d'acquittement;
- de router 51 les paquets ainsi marqués vers l'adresse générique correspondant au flot de données secondaire transmis par le canal unidirectionnel (flot secondaire 2).

Réciproquement, comme l'illustre la figure 6, dans le cas du PEP récepteur 43a relié au terminal client 41, le routage asymétrique 433 aura pour fonctions de:
- détecter le flot des informations d'acquittement associées au flot de données secondaire reçues via le canal unidirectionnel (IP Interface # 22)
- marquer ces paquets d'informations d'acquittement;
- de router 61 ces paquets vers le canal bidirectionnel concerné (IP Interface # 21).

Cette mise en œuvre directe constitue un mode de mise en œuvre avantageux car simple d'un point de vue fonctionnel. Cependant, il peut introduire des contraintes réseau, en particulier quand, dans le cas d'une transmission par canaux satellite, il existe d'autres équipements intermédiaires d'aiguillage, de type routeur ou commutateur ("switch") placés entre les PEP et les équipements de transmission satellite. Les paquets associés à un port physique devront forcément comporter l'adresse destination attendue pour cette interface, sous peine de ne pas être acheminés (i.e. d'être rejetés).

Néanmoins dans de telles circonstances, une solution alternative peut être envisagée qui consiste :
- coté PEP récepteur 43a, à encapsuler, au niveau du routage asymétrique, le paquet d'informations d'acquittement portant l'adresse IP de destination (IP Interface # 11) dans un paquet IP d'un second niveau (encapsulation IP dans IP), comportant comme adresse de destination externe l'adresse IP Interface #1 de l'équipement intermédiaire. Le paquet pourra ainsi être acheminé jusqu'au PEP destinataire final.
- coté PEP émetteur 43b, à extraire le paquet donné IP interne, puis à le router de façon habituelle.

Comme cela a été dit précédemment, le procédé selon l'invention permet d'établir un échange de données entre deux terminaux, via un protocole d'échanges bidirectionnels avec génération et transfert d'informations d'acquittement de la part du terminal récepteur vers le terminal récepteur, en utilisant des canaux de transmission de données bidirectionnels et de canaux unidirectionnels. Cette utilisation permet avantageusement, notamment dans le cas d'un réseau de communication par voies satellite, d'augmenter de manière substantielle le débit des informations transmises.

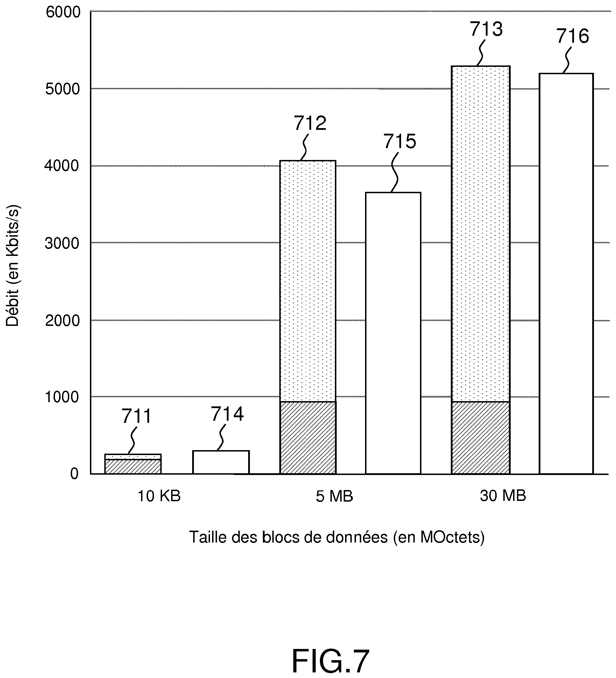

La figure 7 illustre le résultat obtenu par la mise en œuvre du procédé selon l'invention dans le cadre, pris comme exemple, d'une structure simplifiée mettant en liaison directe MP-TCP, de bout en bout (i.e. sans mise en place d'interfaces PEP entre le réseau et les terminaux), avec un paramétrage optimal, un terminal émetteur et un terminal récepteur.

Sur le graphique de la figure 7, les parties hachurées des bar-graphs 711, 712 et 713 indiquent les performances, prises comme référence, d'une connexion TCP sur un lien bidirectionnel (type lien terrestre) de 1 Mbits/s et en les parties tramées du même bar-graphs une connexion sur un lien bidirectionnel (type satellite) de 5 Mbps. En abscisses la taille du message est représentée.

Les bar-graphs 714, 715 et 716, ni hachurés ni tramés, correspond à une liaison hybride mettant en œuvre le procédé selon l'invention dans un environnement hybride MPTCP, avec un lien terrestre à 1 Mbits/s bidirectionnel et lien satellite 5 Mbits/s unidirectionnel, le mécanisme de routage asymétrique des informations d'acquittement selon l'invention étant activé.

Le graphique de la figure 7 permet de constater, au travers de cet exemple particulier, que le procédé selon l'invention permet de mutualiser largement les deux ressources parviennent à utiliser les ressources des deux systèmes, et que, dès lors que la taille du message est suffisante, typiquement au-delà de 5 méga octets, on obtient des performances quasiment optimales, sensiblement équivalent à l'exploitation de deux canaux bidirectionnels, par rapport aux ressources disponibles.

## Revendications

1. Procédé pour réaliser l'échange de flots de données entre deux terminaux, un terminal serveur (22, 42) fournissant des données à un terminal client (21, 41), par l'intermédiaires d'une liaison multivoies (44) formée d'une pluralité de canaux de transmission (441, 442), ledit flot de donné contenant des données transmises du terminal serveur (22, 42) au terminal client (21, 41) ainsi que des informations d'acquittement transmises dans le même flot du terminal client (21, 41) au terminal serveur (22, 42); ledit procédé mettant en œuvre un module d'interface (43b) dédié à l'émission des données formant ledit flot de données, réalisant la séparation dudit flot de données en une pluralité de flots de données secondaires et faisant transiter lesdits flots de données secondaires via ladite pluralité de canaux de transmission (441, 442) formant la liaison multivoies (44), ainsi qu'un module d'interface (43a) dédié à la réception desdites données, réalisant la réception des données formant les flots de données secondaires transmis via ladite pluralité de canaux (441, 442) et le réassemblage desdits flots de données secondaires en un flot de données unique;
**caractérisé en ce que**, au moins un des canaux de la liaison multivoies étant un canal monodirectionnel (442), dépourvu de voie de retour, les modules d'interface (33a, 33b) sont en outre configurés pour assurer le routage des informations d'acquittement des paquets de données composant un flot de données secondaire transitant par un canal monodirectionnel (442) en les associant aux informations d'acquittement des paquets de données composant un flot de données secondaire transitant par un canal bidirectionnel (441).

2. Procédé selon la revendication 1, **caractérisé en ce que** le protocole d'échange des données entre les deux terminaux (41, 42) étant un protocole TCP, chaque module d'interface (43a, 43b) est configuré pour réaliser une fonction d'interface TCP/MPTCP (431) permettant de faire transiter le flot de données TCP considéré par la liaison multivoies (44), sous forme de flots de données secondaires chaque flots secondaire étant conforme au protocole MP-TCP.

3. Procédé selon la revendication 2, **caractérisé en ce que**, en mode émission, un module d'interface (43b) est configuré de façon à assurer simultanément:
- une fonction "interface TCP" (431), qui gère les échanges de flots de données avec le terminal (41) considéré;
- une fonction "adaptation TCP/MP-TCP" (432) qui assure en la séparation du flot des données, au format TCP, en une pluralité de flots de données secondaires au format MP-TCP;
- une fonction "routage asymétrique" (433) qui permet de gérer le routage par un canal bidirectionnel des paquets d'informations d'acquittement accompagnant les paquets de données composant un flot de données secondaire destiné à transiter par un canal unidirectionnel.

4. Procédé selon la revendication 3, **caractérisé en ce que**, en mode émission, la fonction de routage asymétrique (433), assurée par un module d'interface (43b), réalise une identification du ou des flots de données secondaires formés à partir d'un flot de donné unique, destinés à transiter par un canal unidirectionnel (442), ainsi qu'un marquage des informations d'acquittement constituant ce ou ces derniers avant d'intégrer ces dernières à un flot de données destiné à transiter par un canal bidirectionnel (441).

5. Procédé selon l'une des revendications 2 à 4, **caractérisé en ce que**, en mode réception, un module d'interface (43a) est configuré de façon à assurer simultanément:
- une fonction "interface TCP" (431), qui gère les échanges de flots de données avec le terminal (42) considéré;
- une fonction "adaptation TCP/MP-TCP" (432) qui assure la reconstitution d'un flot de données unique au format TCP à partir des données composant les flots de données secondaires reçus
- une fonction "routage asymétrique" (433) qui permet de récupérer les paquets d'informations d'acquittement relatives aux paquets de données composant un flot de données secondaire ayant transité par un canal unidirectionnel (442), et de réassocier les données aux informations d'acquittement correspondantes.

6. Procédé selon la revendication 5, **caractérisé en ce que**, en mode réception, la fonction de routage asymétrique, assurée par un module d'interface (43a), réalise l'identification des informations d'acquittement marquées et la réassociation de ces informations aux données constituant le flot de données secondaire ayant transité par le canal unidirectionnel (442) correspondant.

7. Procédé selon l'une des revendications 1 à 6, **caractérisé en ce que** lesdits éléments d'interface (43a, 43b) sont intégrés à des serveurs PEP placés en sortie des terminaux considérés et chargés de gérer et d'optimiser le débit des données échangées de façon à éviter la saturation de la liaison et la perte récurrente de paquets de données.

8. Procédé selon l'une des revendications 3 à 6, **caractérisé en ce que** les fonctions "interface TCP" (431), et "adaptation TCP/MP-TCP" (432) du module d'interface (43b) en mode émission étant intégrées à un serveur PEP placé en sortie du terminal serveur (42) et les fonctions "interface TCP" (431), et "adaptation MP-TCP/TCP" (432) du module d'interface (43a) en mode réception étant intégrées à un serveur PEP placé en sortie du terminal client (41), les fonctions "routage asymétrique" (433) respectives sont implantées dans des machines interfaces additionnelles, de type routeur ou commutateurs, placées en sortie des serveurs PEP.

9. Mise en œuvre du procédé selon l'une quelconque des revendications précédentes pour réaliser l'échange de flots de données entre les deux terminaux (21, 22), dont la liaison multivoies (44) est formée d'une pluralité de canaux de transmission satellite (24, 25) dont au moins un des canaux (25) est un canal monodirectionnel assurant des liaisons de type broadcast.

## Patentansprüche

1. Verfahren zum Bewerkstelligen des Austauschs von Datenströmen zwischen zwei Endgeräten, wobei ein Server-Endgerät (22, 42) Daten an ein Client-Endgerät (21, 41) bereitstellt, über eine Multikanalverbindung (44), gebildet aus einer Vielzahl von Übertragungskanälen (441, 442), wobei der Datenstrom Daten enthält, welche vom Server-Endgerät (22, 42) an das Client-Endgerät (21, 41) übertragen werden, sowie Quittierungsinformationen, welche in demselben Strom vom Client-Endgerät (21, 41) an das Server-Endgerät (22, 42) übertragen werden;
wobei das Verfahren ein Schnittstellenmodul (43b) einsetzt, welches zur Sendung der Daten vorgesehen ist, welche den Datenstrom bilden, welches die Trennung des Datenstroms in eine Vielzahl von sekundären Datenströmen bewerkstelligt und die sekundären Datenströme über die Vielzahl von Übertragungskanälen (441, 442), welche die Multikanalverbindung (44) bildet, passieren lässt, sowie ein Schnittstellenmodul (43a), welches zum Empfang der Daten vorgesehen ist, welches für den Empfang der Daten, welche die sekundären Datenströme bilden, welche über die Vielzahl von Kanälen (441, 442) übertragen werden, vorgesehen ist und die Wiederzusammensetzung der sekundären Datenflüsse zu einem einzigen Datenstrom bewerkstelligt;
**dadurch gekennzeichnet, dass** mindestens einer der Kanäle der Multikanalverbindung ein monodirektionaler Kanal (442) ohne Rücksendekanal ist, wobei die Schnittstellenmodule (33a, 33b) ferner konfiguriert sind, um das Routing der Quittierungsinformationen der Datenpakete zu gewährleisten, die einen sekundären Datenstrom bilden, welcher durch einen monodirektionalen Kanal (442) passiert, indem diese den Quittierungsinformationen der Datenpakete zugeordnet werden, die einen sekundären Datenstrom bilden, welcher durch einen bidirektionalen Kanal (441) passiert.

2. Verfahren nach Anspruch 1, **dadurch gekennzeichnet, dass** das Datenaustauschprotokoll zwischen den beiden Endgeräten (41, 42) ein TCP-Protokoll ist, wobei jedes Schnittstellenmodul (43a, 43b) konfiguriert ist, um eine TCP/MPTCP-Schnittstellenfunktion (431) auszuführen, die es ermöglicht, den betrachteten TCP-Datenstrom durch die Multikanalverbindung (44) in Form von sekundären Datenströmen passieren zu lassen, wobei jeder sekundäre Datenstrom mit dem MP-TCP-Protokoll übereinstimmt.

3. Verfahren nach Anspruch 2, **dadurch gekennzeichnet, dass** im Sendemodus ein Schnittstellenmodul (43b) derart konfiguriert ist, um gleichzeitig Folgendes zu gewährleisten:
- eine Funktion einer "TCP-Schnittstelle" (431), welche die Austausche von Datenströmen mit dem betrachteten Endgerät (41) verwaltet;
- eine Funktion der "TCP/MP-TCP-Anpassung" (432), welche die Trennung des Datenstroms im TCP-Format in eine Vielzahl von sekundären Datenströmen im MP-TCP-Format gewährleistet;
- eine Funktion des "asymmetrischen Routings" (433), welche es ermöglicht, dass Routing über einen bidirektionalen Kanal der Quittierungsinformationspakete zu verwalten, welche die Datenpakete begleiten, welche einen sekundären Datenstrom bilden, welcher dazu bestimmt ist, durch einen unidirektionalen Kanal zu passieren.

4. Verfahren nach Anspruch 3, **dadurch gekennzeichnet, dass** im Sendemodus die asymmetrische Routingfunktion (433), welche durch ein Schnittstellenmodul (43b) gewährleistet wird, eine Identifizierung des oder der sekundären Datenströme bewerkstelligt, welche anhand des einzigen Datenstroms gebildet wurden, welche dazu bestimmt sind, durch einen unidirektionalen Kanal (442) zu passieren, sowie eine Markierung der Quittierungsinformationen, welche letzteren oder letztere bilden, bevor diese in einen Datenstrom integriert werden, welcher dazu bestimmt ist, durch einen bidirektionalen Kanal (441) zu passieren.

5. Verfahren nach einem der Ansprüche 2 bis 4, **dadurch gekennzeichnet, dass** im Empfangsmodus ein Schnittstellenmodul (43a) derart konfiguriert ist, um gleichzeitig Folgendes zu gewährleisten:
- eine Funktion einer "TCP-Schnittstelle" (431), welche die Austausche von Datenströmen mit dem betrachteten Endgerät (42) verwaltet;
- eine Funktion der "TCP/MP-TCP-Anpassung" (432), welche die Wiederherstellung eines einzigen Datenstroms im TCP-Format gewährleistet, anhand der Daten, welche die empfangenen sekundären Datenströme bilden
- eine Funktion des "asymmetrischen Routings" (433), welche es ermöglicht, die Quittierungsinformationspakete bezüglich der Datenpakete, welche einen sekundären Datenstrom bilden, welcher durch einen unidirektionalen Kanal (442) passiert ist, abzugreifen und die Daten den entsprechenden Quittierungsinformationen neu zuzuordnen.

6. Verfahren nach Anspruch 5, **dadurch gekennzeichnet, dass** im Empfangsmodus die asymmetrische Routingfunktion, welche durch ein Schnittstellenmodul (43a) gewährleistet wird, die Identifizierung der markierten Quittierungsinformationen und die Neuzuordnung dieser Informationen mit den den sekundären Datenstrom bildenden Daten, welcher durch den entsprechenden unidirektionalen Kanal (442) passiert ist, bewerkstelligt.

7. Verfahren nach einem der Ansprüche 1 bis 6, **dadurch gekennzeichnet, dass** die Schnittstellenelemente (43a, 43b) in den am Ausgang der betrachteten Endgeräte platzierten PEP-Servern integriert und damit betraut sind, die Rate der ausgetauschten Daten zu verwalten und zu optimieren, um die Sättigung der Verbindung und den wiederholten Verlust von Datenpaketen zu vermeiden.

8. Verfahren nach einem der Ansprüche 3 bis 6, **dadurch gekennzeichnet, dass** die Funktionen "TCP-Schnittstelle" (431) und "TCP/MP-TCP-Anpassung" (432) des Schnittstellenmoduls (43b) im Sendemodus in einen am Ausgang des Server-Endgerätes (42) platzierten PEP-Server integriert sind und die Funktionen "TCP-Schnittstelle" (431) und "MP-TCP/TCP-Anpassung" (432) des Schnittstellenmoduls (43a) im Empfangsmodus in einen am Ausgang des Client-Endgerätes (41) platzierten PEP-Server integriert sind, wobei die jeweiligen Funktionen des "asymmetrischen Routings" (433) in zusätzlichen Schnittstellenmaschinen vom Typ Router oder Umschalter, welche am Ausgang der PEP-Server platziert sind, implantiert sind.

9. Umsetzung des Verfahrens nach einem der vorhergehenden Ansprüche zur Bewerkstelligung des Austauschs von Datenströmen zwischen den beiden Endgeräten (21, 22), deren Multikanalverbindung (44) aus einer Vielzahl von Satellitenübertragungskanälen (24, 25) gebildet ist, wovon mindestens einer der Kanäle (25) ein monodirektionaler Kanal ist, welcher Verbindungen vom Typ Broadcast gewährleistet.

## Claims

1. Method for executing exchange of data flows between two terminals, a server terminal (22, 42) providing data to a client terminal (21, 41), by way of a multipath link (44) formed of a plurality of transmission channels (441, 442), said data flow containing data transmitted from the server terminal (22, 42) to the client terminal (21, 41) and also acknowledgement information transmitted in the same flow from the client terminal (21, 41) to the server terminal (22, 42),
said method implementing an interface module (43b) dedicated to transmitting the data forming said data flow, executing separation of said data flow into a plurality of secondary data flows and transiting said secondary data flows via said plurality of transmission channels (441, 442) forming the multipath link (44), and also an interface module (43a) dedicated to receiving said data, executing reception of the data forming the secondary data flows transmitted via said plurality of channels (441, 442) and reassembling said secondary data flows into a single data flow;
**characterized in that** at least one of the channels of said multipath link is a unidirectional channel (442) without any return path, the interface modules (33a, 33b) furthermore being configured to provide routing of the acknowledgement information of the data packets forming a secondary data flow transiting via a unidirectional channel (442) by associating them with the acknowledgement information of the data packets forming a secondary data flow transiting via a bidirectional channel.

2. Method according to Claim 1, **characterized in that**, with the protocol for exchanging data between the two terminals (41, 42) being a TCP protocol, each interface module (43a, 43b) is configured to perform a TCP/MPTCP (431) interface function that makes it possible to transit the TCP data flow under consideration via the multipath link (44), in the form of secondary data flows, each secondary flow being in accordance with the MP-TCP protocol.

3. Method according to Claim 2, **characterized in that**, in transmission mode, an interface module (43b) is configured in such a way as to simultaneously provide:
- a 'TCP interface' function (431) that manages the data flow exchanges with the terminal (41) under consideration;
- a 'TCP/MP-TCP adaptation' function (432) that provides separation of the data flow, in the TCP format, into a plurality of secondary data flows in the MP-TCP format;
- an 'asymmetric routing' function (433) that makes it possible to manage the routing, via a bidirectional channel, of the acknowledgement information packets accompanying the data packets forming a secondary data flow intended to transit via a unidirectional channel.

4. Method according to Claim 3, **characterized in that**, in transmission mode, the asymmetric routing function (433), provided by an interface module (43b), executes identification of the secondary data flow(s) formed from a single data flow and intended to transit via a unidirectional channel (442), and marks the acknowledgement information forming the latter before integrating the latter into a data flow intended to transit via a bidirectional channel (441).

5. Method according to one of claims 2 to 4, **characterized in that**, in reception mode, an interface module (43a) is configured in such a way as to simultaneously provide:
- a 'TCP interface' function (431) that manages the data flow exchanges with the terminal (42) under consideration;
- a 'TCP/MP-TCP adaptation' function (432) that ensures reproduction of a single data flow in the TCP format from the data forming the received secondary data flows;
- an 'asymmetric routing' function (433) that makes it possible to recover the acknowledgement information packets relating to the data packets forming a secondary data flow that has transited via a unidirectional channel (442) and to reassociate the data with the corresponding acknowledgement information.

6. Method according to Claim 5, **characterized in that**, in reception mode, the asymmetric routing function, provided by an interface module (43a), executes identification of the marked acknowledgement information and reassociation of this information with the data forming the secondary data flow that has transited via the corresponding unidirectional channel (442).

7. Method according to one of claims 1 to 6, **characterized in that** said interface elements (43a, 43b) are integrated into PEP servers, located at the output of the terminals under consideration and responsible for managing and optimizing the throughput of the exchanged data so as to avoid saturation of the link and the recurrent loss of data packets.

8. Method according to one of claims 3 to 6, **characterized in that**, with the 'TCP interface' (431) and 'TCP/MP-TCP adaptation' (432) functions of the interface module (43b) in transmission mode being integrated into a PEP server located at the output of the server terminal (42) and the 'TCP interface' (431) and 'MP-TCP/TCP adaptation' (432) functions of the interface module (43a) in reception mode being integrated into a PEP server located at the output of the client terminal (41), the respective 'asymmetric routing' functions (433) are situated in additional interface machines of router or switch type that are located at the output of the PEP servers.

9. Implementation of the method according to any one of the preceding claims in order to execute exchange of data flows between the two terminals (21, 22), the multipath link (44) of which is formed of a plurality of satellite transmission channels (24, 25) at least one of the channels (25) of which is a unidirectional channel providing links of broadcast type.
